# EUROPÄISCHE PATENTANMELDUNG

(11) **EP 2 865 941 A1**
(43) Veröffentlichungstag der Anmeldung: **29.04.2015**
(21) Anmeldenummer: 13005709.4
(22) Anmeldetag: 09.12.2013
(51) Int. Cl.: F22B 21/26, F01K 23/14, F01K 23/06, F01K 23/10

(54) **Verwendung eines gewickelten Wärmeübertragers zur Erzeugung überhitzten Dampfs aus Verbrennungs- oder Abgasen bei Heizanlagen oder Verbrennungsmaschinen**

(30) Priorität: 22.10.2013 DE 102013017566
(71) Anmelder: Linde Aktiengesellschaft, 80331 München (DE)
(72) Erfinder: Schönberger, Manfred, 83342 Tacherting (DE); Seeholzer, Christoph, 83308 Trostberg (DE)
(74) Vertreter: Meilinger, Claudia Sabine

(57) **Zusammenfassung**

Die Erfindung betrifft eine Vorrichtung zur Wärmeübertragung, umfassend eine Verbrennungseinrichtung (11,15) zur Verbrennung eines Brennstoffes unter Entstehung von Wärme und eines Verbennungsgasstromes (31), wobei der Verbrennungsgasstrom (31) einen Teil der erzeugten Wärme umfasst, und ein mit der Verbrennungseinrichtung (11,15) in Strömungsverbindung stehendes Mittel zur Übertragung der Abwärme des Verbrennungsgasstromes auf ein Arbeitsfluid (35), insbesondere Wasser. Erfindungsgemäß ist dabei vorgesehen, dass das Mittel zur Übertragung der Wärme als ein gewickelter Wärmeübertrager (21) ausgebildet ist. Die Erfindung betrifft weiterhin ein Verfahren zur Wärmeübertragung, insbesondere unter Verwendung der erfindungsgemäßen Vorrichtung.

## Beschreibung

Die Erfindung betrifft eine Vorrichtung und ein Verfahren zur Wärmeübertragung, insbesondere zur Abwärmeübertragung, insbesondere zur Erzeugung von mechanischer oder elektrischer Energie.

Eine solche Vorrichtung umfasst üblicherweise eine Verbrennungseinrichtung zur Verbrennung eines Brennstoffes unter Entstehung von Wärme und eines Verbrennungsgasstromes, wobei der Verbrennungsgasstrom einen Teil der erzeugten Wärme umfasst, und ein mit der Verbrennungseinrichtung in Strömungsverbindung stehendes Mittel zur Übertragung der Wärme des Verbrennungsgasstromes auf ein Arbeitsfluid, insbesondere Wasser.

Um Wärme, insbesondere Abwärme, in mechanische oder elektrische Energie umwandeln zu können, gibt es zum Beispiel in der Kraftwerkstechnik verschiedene Methoden, wobei der Clausius-Rankine-Kreisprozess bzw. der Organic-Rankine-Kreisprozess oder der Stirling-Kreisprozess die technisch ausgereiftesten sind. All diese Prozesse benötigen einen Wärmeübertrager, welcher die Wärme aus einem Abgas bzw. Verbrennungsgas in den jeweiligen Kreisprozess überträgt, wobei insbesondere die Wärme zur Erzeugung von ggf. überhitztem Wasserdampf genutzt wird.

Dampferzeuger für den "Hausgebrauch" sind zu teuer und in ihrer Betriebsweise äußerst aufwändig zu betreiben. Zudem sind sie bei wärmegeführten Heizungsanlagen oft vielen zyklischen Belastungen unterworfen. Aufgrund der kleinen Leistungen für den Heizbereich (insbesondere Gebäudeheizung) müssen solche Anlagen ohne Überwachungspersonal, mit langen Wartungsintervallen und absolut fehlertolerant betrieben werden können. Hinzu kommt noch die relativ kleine "Vollastzeit" (ca. 2000 Std. im Jahr), was die zulässigen spezifischen Investitionskosten nochmals einschränkt.

Herkömmliche Abhitzedampferzeuger sind bei stationären Anlagen (z.B.: GUD-Kraftwerken) in der Regel aufgebaut wie normale Dampferzeuger. Durch die großen Dimensionen ist eine flexible Konstruktion notwendig, um die auftretenden Wärmeausdehnungen zu kompensieren. Diese hohe Flexibilität macht die Wärmeübertrager jedoch anfällig für Schwingungen, bzw. für externe Beschleunigungen, wie sie in Fahrzeugen vorkommen. Ein weiteres Problem stellt bei dieser Bauart die hohe Lastwechselzahl bei Verbrennungsmotoren dar (mehrere Starts und Stops täglich, sowie unterschiedlichste Lastkollektive).

Standardwärmeübertrager wie z.B. U-Rohr-Wärmeübertrager (z.B. nach der TEMA-Klassifikation) haben auf der Rohrseite meist nicht genug Rohrlänge um einen Zwangsdurchlauf zu gewährleisten, womit zusätzliche Apparate wie Dampftrommel oder Abscheider nötig sind, welche bei Betriebsweisen mit externen Beschleunigungen nur eingeschränkt funktionieren und des Weiteren Platz beanspruchen. Außerdem werden dadurch die Komplexität der Anlage erhöht, die Betriebsweise erschwert, und zusätzliche Kosten verursacht.

Plattenwärmeübertrager sind aufgrund der verwendeten Medien und Temperaturen im Abgas bzw. Verbrennungsgas nicht mit gut wärmeleitenden Werkstoffen wie Aluminium oder Kupfer zu fertigen, sondern benötigen meist Komponenten aus Edelstahl. Durch den Einsatz von Edelstahl ist die Wärmeleitung von den Fins (Hauptoberfläche bei Plattenwärmeübertragern) zu den Trennblechen deutlich schlechter. Des Weiteren treten durch die hohen Lastwechselzahlen und die steilen Temperatur- und Druckgradienten unzulässige mechanische und thermische Spannungen auf.

Hiervon ausgehend liegt daher der vorliegenden Erfindung die Aufgabe zugrunde, eine Vorrichtung und ein Verfahren zur Übertragung von in einem Verbrennungsgasstrom enthaltener Wärme, insbesondere Abwärme, zur Verfügung zu stellen, welche insbesondere in der Lage sind, viele zyklische Belastungen bzw. Lastwechsel in kurzer Zeit aushalten zu können, insbesondere hohe Lastwechsel in Bezug auf Druck oder Temperatur des Verbennungsgases.

Dieses Problem wird durch eine Vorrichtung mit den Merkmalen des Anspruchs 1 und ein Verfahren mit den Merkmalen des Anspruchs 12 gelöst. Vorteilhafte

Ausgestaltungen der Erfindung sind u.a. in den zugehörigen Unteransprüchen angegeben.

Danach ist vorgesehen, dass das Mittel zur Übertragung der Wärme des Verbrennungsgasstromes als ein gewickelter Wärmeübertrager ausgebildet ist.

Ein gewickelter Wärmeübertrager weist vorzugsweise mehrere Rohre auf, die in mehreren Lagen um ein Kernrohr gewickelt sind, sowie einen Mantel, der einen Mantelraum begrenzt, in dem die Rohre sowie das Kernrohr angeordnet sind.

Die Verwendung eines gewickelten Wärmeübertragers in der erfindungsgemäßen Vorrichtung hat dabei mehrere Vorteile. Ein gewickelter Wärmeübertrager ist im Vergleich zu anderen Wärmeübertragern sehr beständig gegen Druck- und Temperaturschwankungen. Damit ist der Betrieb der erfindungsgemäßen Vorrichtung mit kurzen Anlaufzeiten und hohen Lastwechselzahlen möglich. Dies ist insbesondere von Bedeutung, wenn die erfindungsgemäße Vorrichtung beispielsweise als Teil eines Fahrzeugantriebs, insbesondere eines Landfahrzeuges, wie etwa ein Schienenfahrzeug, oder eines Wasserfahrzeugs, wie etwa ein Schiff, oder einer Heizanlage ausgebildet ist, in der in der Regel kein kontinuierlicher Betrieb vorgesehen oder realisierbar ist und durch die oben genannten kurzen Anlaufzeiten und hohen Lastwechselzahlen gekennzeichnet ist. Insbesondere werden die weiter oben beschriebenen Nachteile vermieden, die bei der Verwendung anderer Wärmeübertrager auftreten. Ein weiteren Vorteil ist, dass gewickelte Wärmeübertrager im Vergleich mit anderen Wärmeübertragern bei vergleichbarer Wärmeübertragungsleistung deutlich geringere Dimensionen aufweisen, was den erfindungsgemäßen Einsatz des gewickelten Wärmeübertragers in räumlich begrenzten Anlagen und Vorrichtungen, wie zum Beispiel Heizanlagen oder Fahrzeugantrieben, überhaupt erst ermöglicht. Weiterhin wird der Wirkungsgrad der erfindungsgemäßen Vorrichtung durch Nutzung der Wärme, insbesondere der Abwärme, insbesondere durch die erfindungsgemäße Verwendung eines gewickelten Wärmeübertragers signifikant erhöht, bei gleichzeitig sehr geringem Druckabfall des Abgasstromes auf der Abgasseite des gewickelten Wärmeübertragers.

Unter einer Verbrennungseinrichtung ist im Sinne der Erfindung insbesondere eine Vorrichtung zu verstehen, in der der besagten Brennstoff unter Entstehung von Wärme und eines Verbrennungsgasstromes verbrannt wird, wobei zumindest ein Teil der entstehenden Wärme durch diese Vorrichtung seiner verwendungswesentlichen Bestimmung zugeführt wird, und zumindest ein anderer Teil der entstehenden Wärme als Abwärme zusammen mit dem Verbrennungsgasstrom als Abgastrom aus der Vebrennungseinrichtung geführt wird, insbesondere durch einen Abgasstromauslass. Alternativ dazu kann die entstehende Wärme auch primär auf das Arbeitsfluid, insbesondere zur Erzeugung eines Arbeitsfuiddampfes, durch den erfindungsgemäßen gewickelten Wärmeübertrager übertragen werden, d.h. insbesondere, dass die verwendungswesentliche Bestimmung in diesem Falle die Erzeugung des Arbeitsfluiddampfs ist.

Als Abwärme wird im Sinne der Erfindung insbesondere die Wärme bezeichnet, die nicht durch die vorbezeichnete Verbrennungseinrichtung ihrer verwendungswesentlichen Bestimmung zugeführt wird bzw. werden kann. Die im Abgasstrom enthaltene Abwärme kann unter anderem durch die Temperatur des Abgasstromes charakterisiert werden.

Beispielsweise kann die Verbrennungseinrichtung als eine Brennkammer ausgebildet sein, die dazu eingerichtet und vorgesehen ist, Wasser zu Heizzwecken oder Bereitstellung von Warmwasser oder Wasserdampf zu erhitzen, wobei insbesondere die Brennkammer in Strömungsverbindung mit beispielsweise Rohren steht, die das zu erwärmende Wasser führen, so dass Wärme auf die Rohre bzw. das darin strömende Wasser übertragbar ist. So kann z.B. das erwärmte Wasser in einer Heizanlage zur Beheizung von z.B. Räumen oder Vorrichtungen verwendet werden. Die Brennkammer kann auch zur Erzeugung von Wasserdampf eingesetzt werden, wobei der erzeugte Wasserdampf arbeitsleistend in einer Wärmekraftmaschine, insbesondere in einer Wasserdampfturbine eingesetzt werden kann. In einer weiteren Ausführungsform der Erfindung ist die Brennkammer Teil einer Heizanlage für ein Gebäude oder eines Kleinst-Kraftwerks. In einer weiteren Ausführungsform der Erfindung ist die Brennkammer als Teil eines Antriebes eines Fahrzeuges ausgebildet, insbesondere eines Schienenfahrzeugs oder eines Wasserfahrzeuges.

Die Verbrennungseinrichtung kann auch eine Verbrennungskraftmaschine darstellen (z.B. ein Kolbenmotor oder eine Gasturbine), in der ein Teil der entstehenden Wärme die Temperatur und den Druck des entstehenden Verbrennungsgases erhöht, wobei das erhitzte und unter Druck stehende Verbrennungsgas arbeitsleistend expandiert wird, beispielsweise zum Antreiben eines Fahrzeugs. So ist in einer Ausführungsform der Erfindung die Verbrennungskraftmaschine als Teil eines Antriebes eines Fahrzeugs ausgebildet. In einer weiteren Ausführungsform der Erfindung umfasst ein solcher Fahrzeugantrieb neben der Verbrennungskraftmaschine ein Mittel, insbesondere ein Getriebe, dass die erzeugte mechanische Energie beispielsweise auf Räder des Fahrzeugs oder die Schiffsschraube eines Schiffes überträgt. Ein solches Fahrzeug kann beispielsweise ein Schienenfahrzeug, ein Lastkraftwagen, ein Wasserfahrzeug (wie etwa ein Schiff), eine Zugmaschine oder eine selbstfahrende Arbeitsmaschine, wie etwa ein Braunkohlebagger bzw. Schaufelradbagger oder eine Förderbrücke sein.

Ein Arbeitsfluid im Sinne der vorliegenden Erfindung ist insbesondere eine Flüssigkeit, die unter Wärmezufuhr verdampfbar ist, wobei der Arbeitsfluiddampf in einem geeignetem Mittel unter Erzeugung von mechanischer Energie expandiert werden kann. Ein geeignetes Arbeitsfluid ist beispielsweise Wasser. Statt Wasser können ggf. auch geeignete organische Lösungsmittel als Arbeitsfluid verwendet werden. Bevorzugt sind diese organischen Lösungsmittel durch eine niedrige Verdampfungstemperatur gekennzeichnet. Beispiele für solche organischen Lösungsmittel sind Chloridfluormethan, Tetrafluorethan, Dichloridfluormethan oder Trichlortrifluorethan. Weiterhin können auch nicht-organische Stoffe wie beispielsweise Ammoniak als Arbeitsfluid verwendet werden.

In einer Ausführungsform der Erfindung ist der Mantelraum des gewickelten Wärmeübertragers zur Aufnahme des Abgasstromes ausgebildet. Hierzu steht der Mantelraum mit der Verbrennungseinrichtung (z.B. Verbrennungskraftmaschine oder Brennkammer, insbesondere eines Heizkessels) in Strömungsverbindung. Die Rohre des gewickelten Wärmeübertragers sind hingegen zur Aufnahme des Arbeitsfluids ausgebildet. Vorzugsweise sind die Rohre des gewickelten Wärmeübertragers helikal um das Kernrohr gewickelt. Vorzugsweise ist der gewickelte Wärmeübertrager dazu eingerichtet und vorgesehen, das Arbeitsfluid unter Entstehung eines Dampfstroms zu verdampfen.

In einer Ausführungsform der Erfindung ist die Verbrennungseinrichtung als Brennkammer ausgebildet, die insbesondere Teil einer Heizanlage für ein Gebäude ist. In einer Ausführungsform der Erfindung ist die Verbrennungseinrichtung als Verbrennungskraftmaschine ausgebildet, insbesondere als Kolbenmotor oder eine Gasturbine.

In einer Ausführungsform der Erfindung ist der Verbrennungsstrom ein Abgasstrom der Verbrennungseinrichtung. In einer Ausführungsform ist die übertragene Wärme Abwärme.

In einer Ausführungsform der Erfindung, umfasst die Verbrennungseinrichtung einen Verbrennungsgasstromauslass zum Herausführen des Verbrennungsgasstromes als Abgasstrom aus der Verbrennungseinrichtung, wobei der Verbrennungsgasstromauslass in Strömungsverbindung mit dem gewickelten Wärmeübertrager steht, inbesondere mit dem Mantelraum des gewickelten Wärmeübertragers. In einer weiteren Ausführungsform der Erfindung ist vorgesehen, dass die Vorrichtung eine Expansionsmaschine aufweist, die mit dem gewickelten Wärmeübertrager in Strömungsverbindung steht, so dass insbesondere jener Dampfstrom aus dem gewickelten Wärmeübertrager in die Expansionsmaschine einleitbar ist, wobei die Expansionsmaschine dazu ausgebildet ist, jenen Dampfstrom unter Erzeugung von mechanischer Energie zu expandieren.

Vorzugsweise steht die Expansionsmaschine weiterhin in Strömungsverbindung mit einem Kondensator, der dazu eingerichtet und vorgesehen ist, das in der Expansionsmaschine entstehende Dampf-Flüssigkeits-Gemisch des Arbeitsfluids zu kondensieren.

Der Kondensator steht bevorzugt in Stromungsverbindung mit einer Pumpe, die vorzugsweise dazu eingerichtet und vorgesehen ist, das Arbeitsfluid zum gewickelten Wärmeübertrager zu transportieren. Ggf. kann das mittels des Kondensators kondensierte Arbeitsfluid in einem Medientank zwischgespeichert werden und von dort mittels der Pumpe in den gewickelten Wärmeübertrager gegeben werden.

Weiterhin ist bevorzugt die Expansionsmaschine mit einem Generator koppelbar, wobei die Expansionsmaschine vorzugsweise dazu eingerichtet und vorgesehen ist, den Generator zur Erzeugung von elektrischer Energie anzutreiben.

Des Weiteren steht in einer Ausführungsform der Erfindung die Verbrennungseinrichtung (z.B. Brennkammer oder Verbrennungskraftmaschine) bevorzugt in Strömungsverbindung mit einer Abgasstromleitung, die dazu ausgebildet ist, den Verbrennungsgasstrom als Abgasstrom über den Verbrennungsgasstromauslass aus der Verbrennungseinrichtung heraus zu führen. Der Mantelraum des gewickelten Wärmeübertragers steht dabei bevorzugt in Strömungsverbindung mit der Abgasstromleitung, d.h., der Mantelraum des gewickelten Wärmübertragers bildet einen Abschnitt jener Abgasstromleitung.

In einer weiteren Ausführungsform der Erfindung, insbesondere für den Fall, dass die Verbrennungseinrichtung als eine Brennkammer ausgebildet ist, steht der gewickelte Wärmeübertrager bevorzugt in Strömungsverbindung mit einem stromab vorgesehenen zweiten Wärmeübertrager, der vorzugsweise dazu eingerichtet und vorgesehen ist, die verbliebene Wärme bzw. Abwärme im Abgasstrom auf Wasser zu übertragen, insbesondere zur Bereitstellung von Warmwasser. Als zweiter Wärmeübertrager kann ein oben beschriebener Standardwärmeübertrager oder ein gewickelter Wärmeübertrager verwendet werden.

Weiterhin zweigt bevorzugt stromab des zweiten oder des gewickelten Wärmeübertragers eine Abgasrückführungsleitung ab, die dazu eingerichtet und vorgesehen ist, zumindest einen Teil des durch den gewickelten Wärmeübertrager und ggf. durch den zweiten Wärmeübertrager gekühlten Abgases stromaufwärts in den an dieser Stellen heißeren Abgasstrom zurückzuführen. Ein Vorteil dieser Ausführungsform ist, dass so die Temperatur des Abgasstroms gesteuert werden kann, und insbesondere das Abgas zur Schonung des gewickelten Wärmeübertragers gekühlt werden kann.

In einer weiteren Ausführungsform der Erfindung steht die Verbrennungseinrichtung in Form einer Verbrennungskraftmaschine in Strömungsverbindung mit einem Turbolader, wobei der Turbolader vom Abgasstrom angeströmt werden kann. Der Turbolader ist insbesondere dazu eingerichtet und vorgesehen, einen Luftstrom zu verdichten, wobei der verdichtete Luftstrom in die Verbrennungskraftmaschine geleitet werden kann. In einer Ausführungsform der Erfindung ist der Turbolader mit der Abgasstromleitung strömungsverbunden, wobei der Turbolader vorzugsweise stromauf des gewickelten Wärmeübertragers angeordnet ist.

In einer weiteren Ausführungsform der Erfindung ist eine Vorrichtung zur Abgasrückführung stromab der Verbrennungskraftmaschine und stromauf des gewickelten Wärmeübertragers, insbesondere stromaufwärts des Turboladers, vorgesehen, wobei die Vorrichtung zur Abgasrückführung dazu eingerichtet und vorgesehen ist, zumindest einen Teil des Abgasstromes zu kühlen und den Teil des gekühlten Abgasstroms in die Verbrennungskraftmaschine zurückzuführen. Eine solche Vorrichtung umfasst insbesondere einen Wärmeübertrager zum Kühlen des Abgasstromes und eine Abgasrückführungsleitung zur Rückführung des gekühlten Abgasstromes.

In einer Ausführungsform der Erfindung ist die Expansionsmaschine mit dem Fahrzeugantrieb koppelbar, wobei insbesondere die in der Expansionsmaschine erzeugte mechanische Energie auf den Fahrzeugantrieb übertragen werden kann bzw. das Fahrzeug antreiben kann.

Gemäß einem weiteren Aspekt der Erfindung wird ein Verfahren zur Wärmeübertragung zur Verfügung gestellt, wobei ein Brennstoff unter Entstehung von Wärme und eines Verbrennungsgasstroms verbrannt wird, und wobei der Verbrennungsgasstrom einen Teil der erzeugten Wärme umfasst, und wobei die Wärme aus dem Verbrennungsgasstrom auf ein Arbeitsfluid, insbesondere Wasser, übertragen wird. Erfindungsgemäß ist dabei vorgesehen, dass die Wärme aus dem Verbrennungsgasstrom durch einen gewickelten Wärmeübertrager auf das Arbeitsfluid übertragen wird.

Das erfindungsgemäße Verfahren kann insbesondere in der oben beschriebenen erfindungsgemäßen Vorrichtung durchgeführt werden.

In einer Ausführungsform der Erfindung ist der Verbrennungsgasstrom ein Abgasstrom, wobei inbesondere die übertragene Wärme Abwärme ist.

In einer Ausführungsform der Erfindung wird der Verbrennungsgasstrom bevorzugt mantelseitig geführt und das Arbeitsfluid rohrseitig.

In einer weiteren Ausführungsform der Erfindung wird das Arbeitsfluid im gewickelten Wärmeübertrager verdampft.

In einer weiteren Ausführungsform der Erfindung wird das verdampfte Arbeitsfluid in einer Expansionsmaschine unter Erzeugung von mechanischer Energie expandiert, insbesondere isentrop.

In einer weiteren Ausführungsform der Erfindung wird die in der Expansionsmaschine erzeugte mechanische Energie zur Erzeugung von elektrischer Energie in einem Generator verwendet.

In einer weiteren Ausführungsform der Erfindung wird der Verbrennungsschritt in einer Brennkammer durchgeführt, die insbesondere Teil einer Heizanlage für ein Gebäude ist.

In einer Ausführungsform der Erfindung wird der Verbrennungsschritt in einer Verbrennungskraftmaschine durchgeführt, insbesondere in einem Kolbenmotor oder einer Gasturbine.

In einer weiteren Ausführungsform der Erfindung wird die Restwärme, die im Abgasstrom nach Durchströmen des gewickelten Wärmeübertragers noch im Abgasstrom vorhanden ist, durch einen zweiten Wärmeübertrager auf Wasser übertragen, insbesondere zur Bereitstellung von Warmwasser.

In einer weiteren Ausführungsform der Erfindung wird zumindest ein Teil des durch den gewickelten Wärmeübertrager und ggf. durch den zweiten Wärmeübertrager gekühlten Abgasstroms dem Abgasstrom entnommen und wieder in den Abgasstrom stromaufwärts des gewickelten Wärmeübertragers zurückgeführt.

In einer weiteren Ausführungsform der Erfindung treibt die Verbrennungskraftmaschine ein Fahrzeug an.

In einer weiteren Ausführungsform der Erfindung wird die in der Expansionsmaschine erzeugte mechanische Energie zum Antrieb des Fahrzeugs verwendet.

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1: eine schematische Darstellung einer Ausführungsform der Erfindung, bei der insbesondere Verbrennungs bzw. Abgase aus einer Brennkammer einem gewickelten Wärmeübertrager zugeführt werden;
- Fig. 2: eine schemtische Darstellung einer weiteren Ausführungsform der Erfindung, bei der insbesondere Abgase aus einer Verbrennungskraftmaschine einem gewickelten Wärmeübertrager zugeführt werden; und
- Fig. 3: eine schematische Darstellung einer weiteren Ausführungsform der Erfindung nach Art der Figur 2.

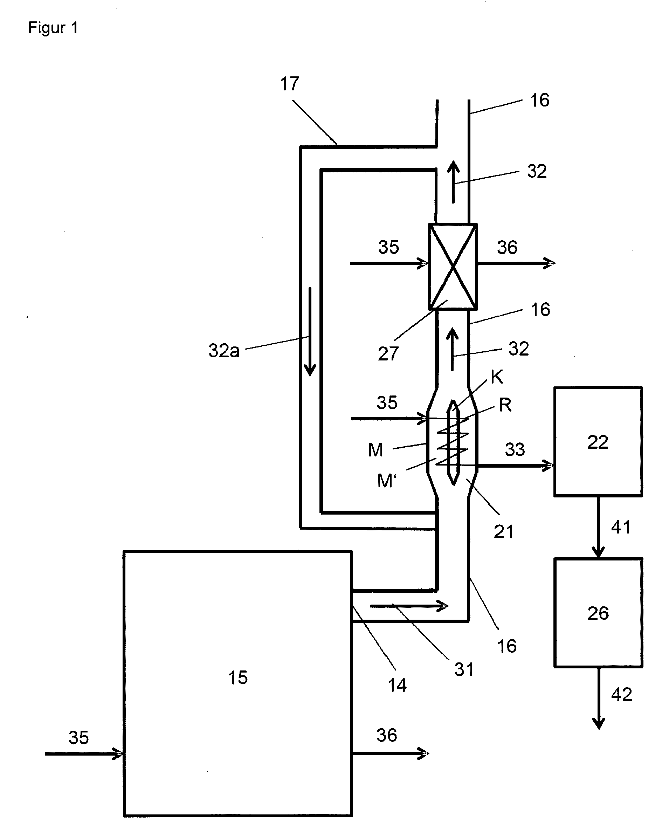

Eine Ausführungsform der Erfindung gemäß Figur 1 betrifft eine Vorrichtung zur Wärmeübertragung mit einem gewickelten Wärmeübertrager 21 zum Wärmetausch zwischen einem Verbrennungs- oder Abgasstrom 31 einer Brennkammer 15 und Wasser 35 zur Erzeugung von überhitztem Wasserdampf, um Wärme in mechanische 41 und/oder elektrische Energie 42 umzuwandeln.

Die Verbrennungs- oder Abgase 31 können dabei aus der Verbrennung 15 von Holz oder anderer organischer Masse, wie z.B. Mist, stammen. Gewickelte Wärmeübertrager 21 besitzen den Vorteil, dass sie in kleinen Abmessungen gefertigt und hohen Temperatur- und Druck(wechsel)belastungen ausgesetzt werden können. Mit Einsatz eines gewickelten Wärmeübertragers 21 können insbesondere Kleinst-Kraftwerke zur Erzeugung von Strom in kleinen Wohneinheiten wie Einfamilienhäusern realisiert werden. Besonders geeignet ist der Einsatz des gewickelten Wärmeübertragers 21 bei Heizanlagen, bei denen Stoffe verbrannt 15 werden, die nicht für den Einsatz in Wärmekraftmaschinen geeignet sind, z. B. Müll, Holzschnitzel, Pellets oder Kohle.

Weiterhin kann gemäß einer Ausführungsform der Erfindung eine solche Einheit als "Vorschaltgerät" bei normalen Heizanlagen verwendet werden. Beispielsweise kann der Mantelraum M' des gewickelten Wärmeübertragers 21 in Strömungsverbindung mit einer Verbrennungseinrichtung 15, wie etwa einem Ölbrenner 15 bzw. dessen Brennkammer 15, stehen sowie mit beheizbaren Wasserohren zur Bereitstellung von Warmwasser 36 (bspw. zu Heizzwecken), wobei der gewickelte Wärmeübertrager 21 in Strömungsrichtung zwischen dem Ölbrenner 15 und den beheizbaren Wasserrohren angeordnet ist. Dabei durchströmt zunächst das heiße Verbrennungsgas des Ölbrenners 15 den Mantelraum M' des gewickelten Wärmeübertragers 21, wobei ein Teil der vom Brenner 15 erzeugten Wärme auf Rohre R des gewickelten Wärmetübertragers 21 bzw.auf darin geführtes Wasser 35 zur Erzeugung von überhitzten Wasserdampf 33 übertragen wird und der entstehende, überhitze Wasserdampf anschließend in einer Expansionsmaschine 22 arbeitsleistend expandiert wird. Danach wird dann die verbleibende Restwärme des Verbrennungsgases auf die beheizbaren Wasserrohre 36 übertragen.

Die Anforderung an einen Wärmeübertrager für diese Anwendung sind vielschichtig:
- Kleine Abmessungen (Heizungskeller, Zusatzgerät),
- Kostengünstig (keine zusätzlichen Komponenten),
- Temperaturwechselunempfindlich über einem großem Bereich (500°C) und große Lastspielzahl (>20000),
- Druckwechselunempfindlichkeit über große Lastspielanzahl (>20000),
- Korrosionsbeständigkeit gegen in den Verbrennungs- oder Abgasen vorhandene Substanzen durch Materialauswahl möglich.

Es hat sich gezeigt, dass diese Anforderungen ein gewickelter Wärmeübertrager am Besten erfüllen kann, insbesondere, wenn dieser automatisiert gefertigt wird. Ein Vorteil ist dabei, dass weniger hochentwickelte Brennstoffe zur Stromerzeugung bei gleichzeitiger Wärmeauskopplung unabhängig von der Betreiberqualifikation genutzt werden können.

Gemäß Fig. 1 weist eine weitere erfindungsgemäße Vorrichtung im Einzelnen die Brennkammer 15 auf, in der ein Brennstoff wie z.B. Kohle, Pellets, Holzschnitzel oder Müll verbrannt wird und mit der entstehenden Wärme Wasser 35 zur Heizung oder Warmwasserversorgung 36 erhitzt wird. Die Brennkammer 15 kann dabei von einem oder mehreren Wasserrohren durchzogen sein, die das zu erhitzende Wasser 35 führen.

Von der Brennkammer 15 geht über einen Verbrennungsgasstromauslass 14 der Brennkammer 15 eine Abgasstromleitung 16 ab, die dazu ausgebildet ist, den Verbrennungsgasstrom 31 als Abgasstrom 31 aus der Brennkammer 15 heraus zu führen. Die Abgasstromleitung 16 mündet in einen Mantelraum M' eines Mantels M des gewickelten Wärmeübertragers 21, der die im Abgas 31 enthaltene Abwärme auf das Wasser 35 überträgt, dieses verdampft und den entstehenden Wasserdampf 33 auf eine Temperatur von ca. 320 bis 500°C überhitzt. Das zu erhitzende Wasser 35 wird dabei in mehreren Rohren R des gewickelten Wärmeübertragers 21 geführt, die helikal um ein im Mantelraum M' angeordnetes Kernrohr K des Wärmeübertragers 21 gewickelt sind. Der gewickelte Wärmeübertrager 21 kann als Abhitzeverdampfer mit Vorteil unmittelbar stromab des Heizkessels 15 eingesetzt werden, da er prinzipbedingt ein hinreichend hohe Temperaturbeständigkeit aufweist.

Stromab des gewickelten Wärmeübertragers 21 ist eine mit den Rohren R des gewickelten Wärmeübertragers 21 in Strömungsverbindung stehende Expansionsmaschine 22 angeordnet, die von dem überhitztem Wasserdampf 33 angeströmt wird und durch dessen Expansion mechanische Arbeit 41 leisten kann. Die Expansionsmaschine 22 ist weiterhin mit einem Generator 26 verbunden, wobei die vom Expander geleistete Arbeit 41 den Generator 26 antreiben kann, der hierdurch elektrische Energie 42 erzeugen kann.

Weiterhin ist stromab des gewickelten Wärmeübertragers 21 ein mit dem Mantelraum M' in Strömungsverbindung stehender zweiter Wärmeübertrager 27 angeordnet, der die vorhandene Restwärme des nun kühleren Abgasstromes 32 auf Wasser 35 zur Bereitstellung von Warmwasser 36 überträgt.

Stromab des zweiten Wärmeübertragers 27 zweigt von der Abgasstromleitung 16 eine Abgasrückführungsleitung 17 ab, die stromauf des gewickelten Wärmeübertragers 21 in die Abgasstromleitung 16 einmündet. Die Abgasrückführungsleitung 17 ist dazu ausgebildet, einen Teil des gekühlten Abgasstromes 32a stromauf des gewickelten Wärmeübertragers 21 in die Abgasstromleitung 16 zurück zu führen.

Diese Rückführung des gekühlten Abgases 32a ermöglicht es, die Temperatur des heißen Abgasstromes 31 zu regulieren und so zum Beispiel das Abgas 31 zur Schonung des gewickelten Wärmeübertragers 21 zu kühlen.

Vorteilhafterweise wird die Verbrennung 15 mit einem in Abhängigkeit vom Brennstoff optimalen Restsauerstoffgehalt durchgeführt, so dass der Abgasstrom 31 ein Maximum an Wärme bzw. Abwärme aufweist, die zur Erzeugung des überhitzten Wasserdampfs 33 verwendet wird. Zu hohe Temperaturen können jedoch den gewickelten Wärmeübertrager 21 beschädigen, so dass der heiße Abgasstrom 31 vorteilhafterweise wie in obiger Weise beschrieben zur Schonung des gewickelten Wärmeübertragers 21 vorgekühlt wird.

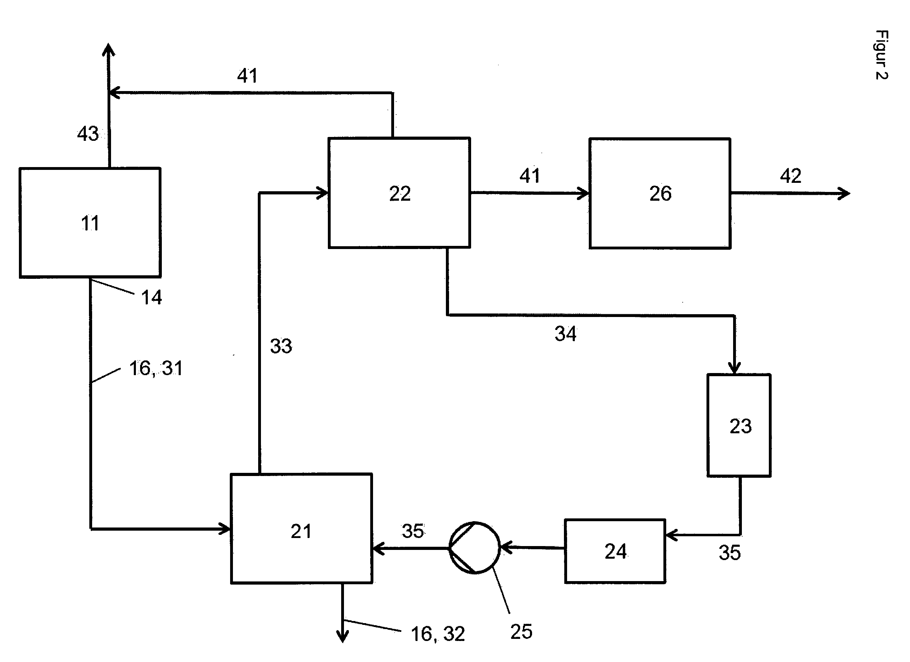

Eine weitere Ausführungsform der Erfindung betrifft insbesondere die Nutzung der Abwärme von Abgasen 31 aus Verbrennungskraftmaschinen 11 gemäß Figur 2, insbesondere Kolbenmotoren, die zur Erzeugung von mechanischer 41 und/oder elektrischer Energie genutzt werden können.

Die Anforderung an einen gewickelten Wärmeübertrager 21 bei der Übertragung von Abwärme aus (Motoren-)Abgasen 31 sind vielschichtig:
- Kleine Abmessungen auf den Fahrzeugen,
- Kostengünstig (keine zusätzlichen Komponenten),
- Temperaturwechselunempfindlich über einem großem Bereich (500°C) und große Lastspielzahl (>100000),
- Druckwechselunempfindlichkeit über große Lastspielanzahl (>30000),
- Korrosionsbeständigkeit gegen im Abgas vorhandene Substanzen,
- Unempfindlichkeit gegen externe Beschleunigungen und Frequenzen.

Es hat sich wiederum gezeigt, dass diese Anforderungen ein gewickelter Wärmeübertrager 21 am Besten erfüllen kann.

Eine bevorzugte erfindungsgemäße Vorrichtung umfasst dabei gemäß Figur 2 z.B. eine Verbrennungskraftmaschine wie beispielsweise einen Dieselmotor 11, der dazu ausgebildet ist, ein Fahrzeug, insbesondere ein Schienenfahrzeug oder Schiff anzutreiben 43.

Im Brennraum eines Zylinders des Dieselmotors 11 wird Dieselkraftstoff unter Entstehung von Wärme und eines Verbennungsgases bei Temperaturen von etwa 2000 °C bis 2500 °C verbrannt 11, wobei sich das Verbrennungsgas durch die entstehende Wärme ausdehnt und Arbeit an einem Kolben im Zylinder leistet. Die so gewonnene mechanische Arbeit/Energie wird z.B. über eine Kurbelwelle z.B. auf Räder des Fahrzeugs übertragen. Durch die Ausdehnung sinkt Temperatur des Verbrennungsgases 31. Nach der Ausdehnung bzw. Expansion wird das Verbrennungsgas 31 als Abgas 31 durch eine gegenläufige Bewegung aus dem Zylinder über einen Verbrennungsgasstromauslass 14 in eine Abgasstromleitung 16 geschoben. Der Abgasstrom 31 enthält dabei den Teil der erzeugten Wärme als Abwärme, der nicht vom Motor 11 zur Erzeugung der Antriebsenergie 43 genutzt wird, und weist eine Temperatur von ca. 500°C auf.

Stromab des Verbrennungsgasstromauslasses 14 des Dieselmotors 11 ist ein gewickelter Wärmeübertrager 21 als Abhitzeverdampfer angeordnet, der die im Abgas 31 enthaltene Abwärme auf das Arbeitsfluid Wasser 35 überträgt, das Wasser somit verdampft und den entstehenden Wasserdampf 33 überhitzt (z.B. auf ca. 400 °C). Das nun gekühlte Abgas 32 verlässt den gewickelten Wärmeübertrager 21 und kann an die Umwelt abgegeben werden. Im gewickelten Wärmeübertrager 21, der gemäß Figur 1 aufgebaut ist, wird bevorzugt das Abgas 31 mantelseitig und das zu erhitzende Wasser 35 rohrseitig geführt. Der gewickelte Wärmeübertrager 21 ist dabei vorteilhafterweise so gelagert, dass er eine hohe Toleranz gegen Schwingungen bei gleichzeitiger Toleranz gegenüber thermischen Ausdehnungen aufweist. Hierzu kann der Wärmeübertrager z.B. an einem Punkt fest gelagert sein und an den weiteren Lagerstellen über ein Gleitlager.

Bei der Verbrennung 11 entstehende Rußpartikel können beispielsweise durch Dampfstrahlen aus dem gewickelten Wärmeübertrager leicht entfernt werden oder in einer abnehmbaren Wanne gesammelt werden, die innerhalb des Mantels M des Wärmeübertragers 21 angeordnet sein kann. Die mit Rußpartikel beaufschlagte Wanne kann nach dem Abnehmen separat gereinigt werden. Der Mantelraum M' des gewickelten Wärmeübertragers 21 ist bevorzugt mit einer Abgasstromleitung 16 strömungsverbunden, die von dem Verbrennungsgsastromauslass 14 abgeht (d.h., der Mantelraum M' bildet einen Abschnitt der Abgasstromleitung 16). Die Abgasstromleitung 16 dient zum Herausführen der Abgase 31 aus dem Dieselmotor 11.

Stromab des gewickelten Wärmeübertragers 21 ist eine mit den Rohren R des gewickelten Wärmeübertragers 21 in Strömungsverbindung stehende Expansionsmaschine 22 angeordnet, die durch Expansion des überhitzten Wasserdampfs 33 mechanische Energie 41 erzeugen kann. Die Expansionsmaschine 22 ist dabei mit einem Generator 23 gekoppelt, der durch die von der Expansionsmaschine 22 erzeugte mechanische Energie 41 zur Erzeugung von elektrischer Energie 42 angetrieben wird.

Stromab der Expansionsmaschine 22 ist ein Kondensator 23 angeordnet, der das in der Expansionsmaschine 22 entstandene Gas-Flüssigkeits-Gemisch 34 kondensiert.

Das nun flüssige Wasser 35 wird in einem Medientank 24 bei z.B. ca. 85°C zwischengelagert, von wo aus das Wasser 35 über eine Pumpe 25 wiederum in den gewickelten Wärmeübertrager 21 befördert wird und der Verdampfungs/Expansionszyklus aufs Neue beginnen kann.

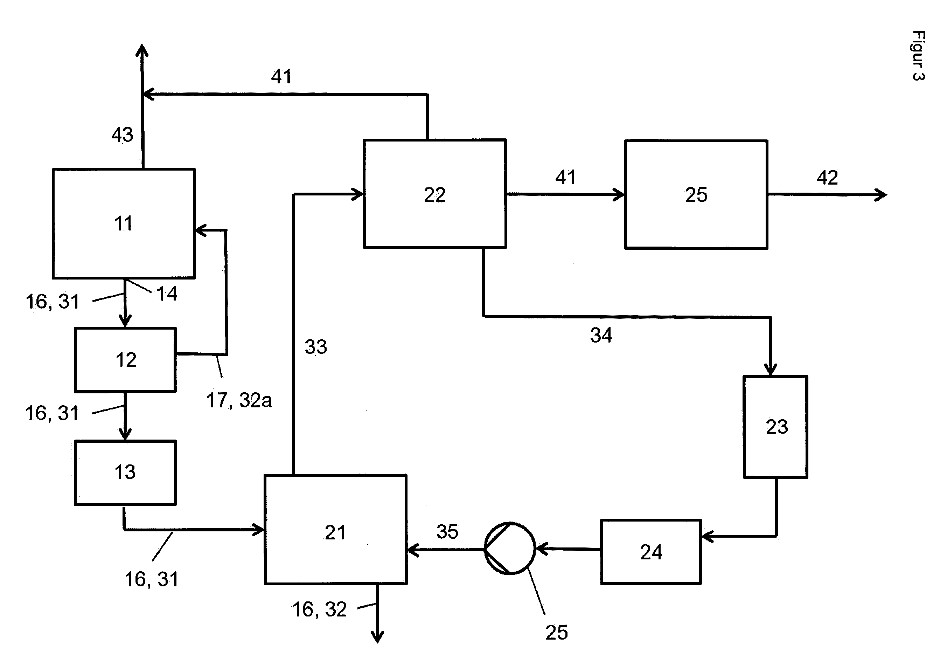

In einer weiteren Ausführungsform der Erfindung gemäß Fig. 3 umfasst die Vorrichtung zusätzlich eine Vorrichtung zur Abgasrückführung 12 und einen Abgasturbolader 13. Die Vorrichtung zur Abgasrückführung 12 ist dabei stromab des Dieselmotors 11 und stromauf des gewickelten Wärmeübertragers 21 angeordnet und ist dazu ausgebildet, zumindest einen Teil 32a des Abgasstromes 31 zu kühlen und einen Teil des gekühlten Abgasstroms 32a über eine Abgasrückführungsleitung 17 zur Verbrennung in den Dieselmotor 11 zurückzuführen. Die Abgasrückführung 12 dient insbesondere dazu, die Verbrennungstemperatur der Verbrennung im Motor 11 zu senken und somit die Bildung an Stickoxiden zu reduzieren. Alternativ dazu kann auch der vom gewickelten Wärmeübertrager 21 gekühlte Abgasstrom 32 zumindest teilweise in den Dieselmotor zurückgeführt werden.

Der Abgasturbolader 13 weist vorzugsweise eine Abgasturbine auf, die durch den Abgasstrom 31 angetrieben wird sowie einen Verdichter, der durch die Abgasturbine angetrieben wird. Der Abgasturbolader 13 ist vorzugsweise dazu ausgebildet, den Luftdurchsatz des Dieselmotors 11 zu erhöhen oder die Ansaugarbeit eines Kolbens des Dieselmotors 11 zu reduzieren.

Durch die Nutzung der Abwärme des Abgases, insbesondere durch die erfindungsgemäße Verwendung eines gewickelten Wärmeübertragers, kann der Wirkungsgrad des Dieselmotors um bis zu 3% gesteigert werden.

**Bezugszeichenliste**

| | |
|---|---|
| 11 | Dieselmotor |
| 12 | Vorrichtung zur Abgasrückführung /Abgaskühler (Wärmeübertrager) |
| 13 | Turbolader |
| 14 | Verbennungsgasstromauslass |
| 15 | Brennkammer |
| 16 | Abgasgasleitung |
| 17 | Abgasgasrückführungsleitung |
| | |
| 21 | Gewickelter Wärmerübertrager |
| 22 | Expander oder Dampfturbine |
| 23 | Kondensator |
| 24 | Medientank |
| 25 | Pumpe |
| 26 | Generator |
| 27 | Wärmeübertrager zur Warmwasserbereitung |
| M | Mantel des gewickelten Wärmeübertragers |
| M' | Mantelraum des gewickelten Wärmeübertragers |
| K | Kernrohr |
| R | Gewickeltes Rohr |
| | |
| 31 | Heißes AbgasNerbrennungsgas |
| 32 | Gekühltes Abgas |
| 32a | Gekühlter Teil des Abgasstroms |
| 33 | Überhitzter Wasserdampf |
| 34 | Wasserdampf/Flüssigwassermischung |
| 35 | Wasser |
| 36 | Warmwasser |
| | |
| 41 | Von Expander oder Dampfturbine erzeugte mechanische Energie |
| 42 | Vom Generator erzeugte elektrische Energie |
| 43 | Antriebsenergie |

## Patentansprüche

1. Vorrichtung zur Wärmeübertragung, umfassend:
- eine Verbrennungseinrichtung (11,15) zur Verbrennung eines Brennstoffes unter Entstehung von Wärme und eines Verbrennungsgasstromes (31), wobei der Verbrennungsgasstrom (31) zumindest einen Teil der erzeugten Wärme umfasst,
- ein mit der Verbrennungseinrichtung (11,15) in Strömungsverbindung stehendes Mittel (21) zur Übertragung der Wärme des Verbrennungsgasstromes (31) auf ein Arbeitsfluid (35), insbesondere Wasser,
**dadurch gekennzeichnet,**
**dass** das Mittel (21) zur Übertragung der Wärme des Verbrennungsgastromes (31) als ein gewickelter Wärmeübertrager (21) ausgebildet ist.

2. Vorrichtung nach Anspruch 1, daduch gekennzeichnet, dass der gewickelte Wärmeübertrager (21) einen Mantel (M) aufweist, der einen Mantelraum (M') zur Aufnahme des Verbrennungsgasstromes (31) umschließt, sowie eine Mehrzahl an Rohren (R) zur Aufnahme des Arbeitsfluids (35), die insbesondere helikal um ein im Mantelraum (M') angeordnetes Kernrohr (K) gewickelt sind, wobei insbesondere der Mantelraum (M') mit der Verbrennungseinrichtung (11, 15) in Strömungsverbindung steht.

3. Vorrichtung nach Anspruch 1 oder 2, **dadurch gekennzeichnet, dass** die Verbrennungseinrichtung (11,15) als eine Brennkammer (15) ausgebildet ist, die insbesondere Teil einer Heizanlage für ein Gebäude ist.

4. Vorrichtung nach Anspruch 1 oder 2, **dadurch gekennzeichnet, dass** die Verbrennungseinrichtung (11) als eine Verbrennungskraftmaschine (11) ausgebildet ist, insbesondere als ein Kolbenmotor oder eine Gasturbine.

5. Vorrichtung nach einem der vorhergehenden Ansprüche, **dadurch gekennzeichnet, dass** der Verbrennungsgasstrom (31) ein Abgasstrom (31) der Verbrennungseinrichtung (11,15) ist, und wobei insbesondere die übertragene Wärme Abwärme ist.

6. Vorrichtung nach einem der vorhergehenden Ansspüche, **dadurch gekennzeichnet, dass** die Verbrennungseinrichtung (11,15) einen Verbrennungsgasstromauslass (14) zum Herausführen des Verbrennungsgasstromes (31) aus der Verbrennungseinrichtung (11,15) umfasst, wobei der Verbrennungsgasstromauslass (14) in Strömungsverbindung mit dem gewickelten Wärmeübertrager (21) steht, insbesondere mit dem Mantelraum (M') des gewickelten Wärmeübertragers (21).

7. Vorrichtung nach einem der Ansprüche 4 bis 6, **dadurch gekennzeichnet, dass** die Verbrennungskraftmaschine (11) als Teil eines Antriebs (43) eines Fahrzeuges ausgebildet ist.

8. Vorrichtung nach einem der vorhergehenden Ansprüche, **dadurch gekennzeichnet, dass** der gewickelte Wärmeübertrager (21) dazu ausgebildet ist, das Arbeitsfluid (35) unter Entstehung eines Dampfstroms (33) zu verdampfen.

9. Vorrichtung nach einem der vorhergehenden Ansprüche, **dadurch gekennzeichnet, dass** die Vorrichtung eine Expansionsmaschine (22) aufweist, die mit dem gewickelten Wärmeübertrager (21) in Strömungsverbindung steht, so dass insbesondere jener Dampfstrom (33) aus dem gewickelten Wärmeübertrager (21) in die Expansionsmaschine (22) einleitbar ist.

10. Vorrichtung nach Anspruch 9, **dadurch gekennzeichnet, dass** die Expansionsmaschine (22) mit einem Generator (26) koppelbar ist, wobei die Expansionsmaschine (22) dazu ausgebildet ist, den Generator (26) zur Erzeugung von elektrischer Energie (42) anzutreiben.

11. Vorrichtung nach Anspruch 7 und nach Anspruch 9 oder 10, **dadurch gekennzeichnet, dass** die Expansionsmaschine (22) mit dem Antrieb (43) koppelbar ist, wobei die Expansionsmaschine (22) dazu ausgebildet ist, mechanische Energie (41) auf den Antrieb (43) zu übertragen.

12. Verfahren zur Wärmeübertragung, bei dem ein Brennstoff unter Entstehung von Wärme und eines Verbrennungsgasstromes (31) verbrannt wird (11, 15), wobei der Verbrennungsgasstrom (31) einen Teil der erzeugten Wärme umfasst, und die Wärme aus dem Verbrennungsgasstrom (31) auf ein Arbeitsfluid (35), insbesondere Wasser, übertragen wird,
**dadurch gekennzeichnet,**
**dass** die Wärme aus dem Verbrennungsgasstrom (31) durch einen gewickelten Wärmeübertrager (21) auf das Arbeitsfluid (35) übertragen wird.

13. Verfahren nach Anspruch 12, **dadurch gekennzeichnet, dass** der Verbrennungsgasstrom (31) ein Abgasstrom (31) ist, und wobei insbesondere die übertragene Wärme Abwärme ist.

14. Verfahren nach Anspruch 12 oder 13, **dadurch gekennzeichnet, dass** das Arbeitsfluid (35) im gewickelten Wärmeübertrager (21) verdampft wird, wobei insbesondere das verdampfte Arbeitsfluid (33) in einer Expansionsmaschine (22) unter Erzeugung von mechanischer Energie (41) expandiert wird.

15. Verfahren nach einem der Ansprüche 12 bis 14, **dadurch gekennzeichnet, dass** die Verbrennung des Brennstoffes in einer Brennkammer (15) oder einer Verbrennungskraftmaschine (11) durchgeführt wird, insbesondere in einem Kolbenmotor oder einer Gasturbine, wobei insbesondere die Verbrennungskraftmaschine (11) ein Fahrzeug antreibt oder wobei insbesondere die Brennkammer Teil einer Heizanlage eines Gebäudes ist.
